(19) Europäisches Patentamt / European Patent Office / Office européen des brevets

(11) **EP 3 801 068 B1**

(12) **EUROPEAN PATENT SPECIFICATION**

(45) Date of publication and mention
of the grant of the patent:
**30.07.2025 Bulletin 2025/31**

(21) Application number: **19728075.3**

(22) Date of filing: **06.06.2019**

(51) International Patent Classification (IPC):
*A23K 20/147* (2016.01)     *A23L 33/185* (2016.01)
*A23J 1/14* (2006.01)     *A23J 3/14* (2006.01)
*A23J 3/34* (2006.01)

(52) Cooperative Patent Classification (CPC):
**A23L 33/185; A23J 1/14; A23J 3/14; A23J 3/34;
A23K 20/147; C12Y 305/03015**

(86) International application number:
**PCT/EP2019/064743**

(87) International publication number:
**WO 2019/234137 (12.12.2019 Gazette 2019/50)**

(54) **MODIFIED RAPESEED PROTEIN ISOLATE**

MODIFIZIERTES RAPSSAMENPROTEINISOLAT

ISOLAT DE PROTÉINE DE COLZA MODIFIÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2018 EP 18176407**

(43) Date of publication of application:
**14.04.2021 Bulletin 2021/15**

(73) Proprietor: **DSM IP Assets B.V.
6221 BE Maastricht (NL)**

(72) Inventors:
• **VLASIE, Monica Diana
6100 AA Echt (NL)**
• **NAN, Helena Maria
6100 AA Echt (NL)**
• **SEIN, Arjen
6100 AA Echt (NL)**

(74) Representative: **dsm-firmenich IP
DSM-Firmenich AG
Wurmisweg 576
4303 Kaiseraugst (CH)**

(56) References cited:
**WO-A1-2017/009100     WO-A1-2018/007492**

• **ZHOU CUNSHAN ET AL: "Hydrolysis of rapeseed
meal protein under simulated duodenum
digestion: Kinetic modeling and antioxidant
activity", LWT- FOOD SCIENCE AND
TECHNOLOGY, ACADEMIC PRESS, UNITED
KINGDOM, vol. 68, 9 December 2015
(2015-12-09), pages 523 - 531, XP029404915,
ISSN: 0023-6438, DOI: 10.1016/J.LWT.2015.11.057**

## Description

### Field of the invention

The present invention is directed to a modified rapeseed protein isolate and to a process for making a modified rapeseed protein isolate with the aid of a peptidyl arginine deiminase.

### Background of the invention

Protein is a main feature of human nutrition. This may be sourced from animals (e.g. meat, fish, egg, dairy) or vegetables. There is a general desire to reduce the amount of animal-based protein. The use of egg protein is often undesirable. For example, due to problems with egg allergies, medical problems associated with cholesterol levels in eggs, religious restrictions/convictions, culinary preferences (such as, for example, a vegetarian or a vegan diet), cost fluctuations in the price of eggs, use of antibiotics and hormones in poultry production, and diseases associated with poultry (such as, for example, bird flu), the use of alternative proteins may be desired. The use of vegetable-based protein in human nutrition is known, for example WO 2008/094434 discloses the use of wheat protein isolates as an alternative to the use of egg yolk protein in compositions. However, the use of wheat protein isolates may not be desirable for those with gluten allergies. The use of soy-based protein instead of whey protein has also been described for example in WO 2014/018922. Soy protein is widely used, however in view of some intolerances to soy products there is a need to find other sources of vegetable proteins.

Suitable alternatives include pea protein and rapeseed protein. Rapeseed seeds are rich in oil and contain considerable amounts of protein that accounts for 17 to 25% of seed dry weight. Processing rapeseed for oil for human consumption produces rapeseed meal (60%) as a byproduct, which contains about 30 to 40% protein. The rapeseed used for this purpose is usually of the varieties *Brassica napus* and *Brassica juncea.* These varieties contain low levels of erucic acid and glucosinolates and are also known as canola. Canola is a contraction of Canada and "ola" (for "oil low acid") but is now a generic term defined as rapeseed oil comprising <2% erucic acid and <30 mmol/g glucosinolates.

The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Napins are more easily solubilized and in for example EP 1715752 B1 a process is disclosed to separate out the more soluble napin fraction, preferably to at least 85 wt.%. Napins are primarily proposed for use in applications where solubility is key.

Rapeseed proteins can also be divided into various fractions according to the corresponding sedimentation coefficient in Svedberg units (S). This coefficient indicates the speed of sedimentation of a macromolecule in a centrifugal field. For rapeseed proteins, the main reported fractions are 12S, 7S and 2S. Cruciferin and napin are the two major families of storage proteins found in rapeseed. Napin is a 2S albumin, and cruciferin is a 12S globulin. Furthermore, Schwenke and Linow (Nahrung (1982) 26, K5-K6) state that the cruciferin complex is present as a 300 kDa 12S hexamer when exposed to higher ionic strength ($\mu \geq 0.5$ mS/cm), and reversibly dissociates into 7S trimeric molecules of 150 kDa when exposed to low ionic strength conditions.

It has been found that high purity rapeseed protein isolate can have a broadly-based functionality in food products, unique among proteinaceous materials. The ability to utilize a protein that is vegetable in origin in food products enables truly vegetarian food products to be provided in instances where egg white and/or animal-derived protein have been used in the absence of any available substitute.

However, the use of plant proteins like rapeseed protein in food is still limited because of poor digestibility, taste, and nutritional value.

Poor digestibility of proteins in diets containing less refined cereals and grain legumes is due to the presence of less digestible protein fractions, high levels of insoluble fibers and/or high concentrations of anti-nutritional factors present or formed during processing. Dietary anti nutritional factors (ANFs) are known to negatively affect the protein digestibility, bioavailability of amino acids and protein quality of foods. The presence of high levels of trypsin inhibitors in soybean and other grain legumes have been shown to cause significant reduction in protein digestibility (up to 50%) in rats and pigs (G. Sarwar Gilani et al., British Journal of Nutrition (2012), 108, S315-S332). Based on the residues at their inhibitory sites, these inhibitors are either lysine- or arginine-type inhibitors. There are two major types of trypsin inhibitors, the Kunitz soybean trypsin inhibitor (KSTI) with an arginine at the reactive site and the Bowman-Birk inhibitor (BBI) with a lysine at the inhibitory site.

Another important factor in making plant-based protein food products is their taste and mouth feel, which notably is relevant in beverages. Vegetable proteins suffer from impaired taste such as bitterness and increased mouth feel even at low protein content. Also, many plant protein beverages contain very low amounts of proteins making them less nutritious and tasty foods.

Zhou Cunshan et al: "Hydrolysis of rapeseed meal protein under simulated duodenum digestion: Kinetic modeling and antioxidant activity", LWT Food Science and Technology, Academic Press, Vol. 68, December 2015, pages 523-531, discloses the kinetics of enzymolysis of rapeseed protein in relation to substrate concentration, initial enzyme concentration and hydrolysis time.

There is a need in the art to improve the properties of rapeseed protein, be it as concentrate, hydrolysate, isolate but certainly also as a food constituent. Hydrolysates are proteins that have been partially broken down by exposing the protein to heat, acid or enzymes that break apart the bonds linking amino acids. This makes hydrolysates taste more bitter, but also allows it to be absorbed more rapidly during digestion than native (non-hydrolyzed) protein. Isolates are purer than concentrates, meaning other non-protein components have been partially removed to "isolate" the protein. Many concentrates are around 80% protein, which means that on a dry basis, 80% of the total weight is protein. Isolates are typically around 90% protein (dry basis). This is calculated using the Kjeldahl method.

## Description of the Figures

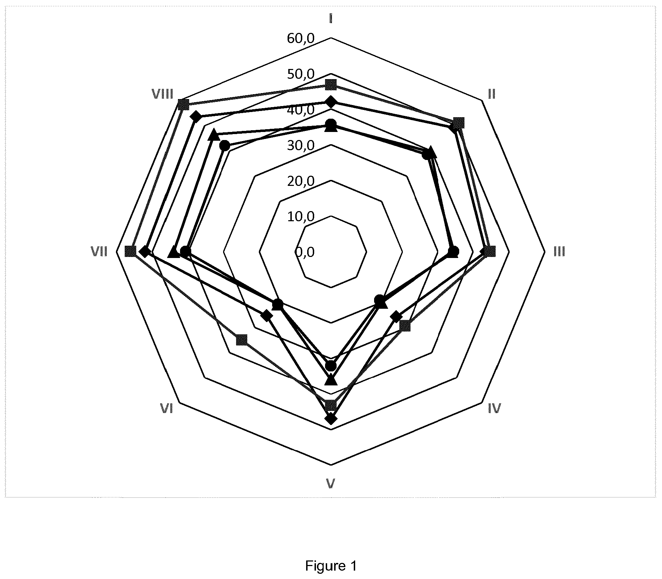

Figure 1: Sensory attributes of a 2% solution of rapeseed protein isolate with and without protein arginine deiminase (PAD) treatment.

■: sensory attributes of rapeseed protein isolate solution untreated with PAD;
♦: sensory attributes of rapeseed protein isolate solution treated with 2U PAD per L;
▲: sensory attributes of rapeseed protein isolate solution treated with 20 U of PAD per L;
●: sensory attributes of rapeseed protein isolate solution treated with 60 U of PAD per L. Sensory attributes are mouthfeel (I), flavor intensity (II), sweet flavor (III), bitter flavor (IV), liquorice flavor (V), bitter aftertaste (VI), length aftertaste (VII), and astringent aftertaste (VIII).

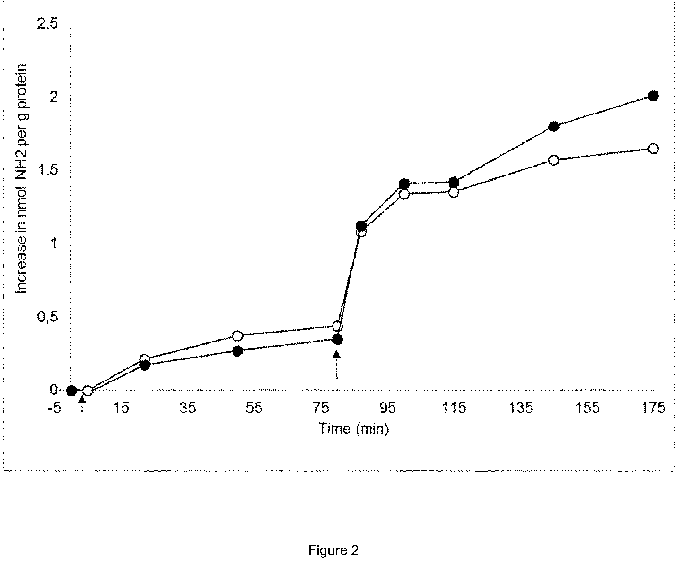

Figure 2: The $NH_2$ released in time from rapeseed protein isolate in the SYMPHYD digestion model without enzyme treated (○) and with PAD treated (•). The arrows indicate the addition points for pepsin at 5 minutes and pancreatin at 80 minutes respectively. An increase in $NH_2$ released (measured by OPA method) indicates a higher digestibility of the protein sample. More than 20% increase in digestibility is observed at the end of digestion for the rapeseed protein isolate treated with PAD compared to untreated sample. X-axis: time (min), Y-axis: increase in nmol $NH_2$ per g protein.

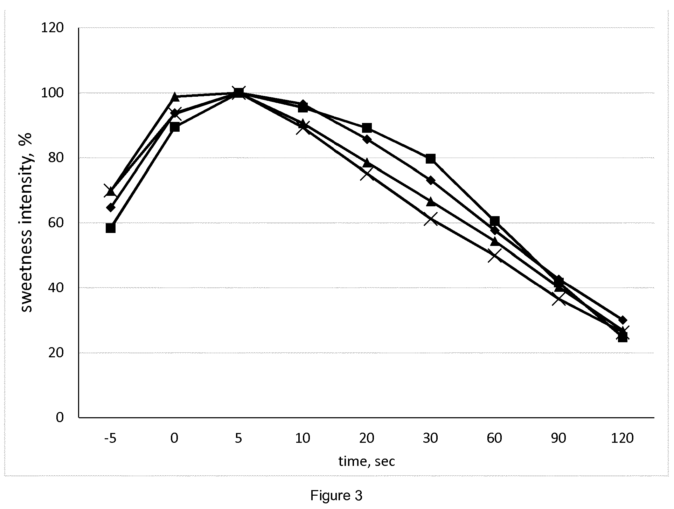

Figure 3: Development of sweetness intensity of rapeseed protein solutions in time with and without PAD.

■: 2% solution of rapeseed protein isolate, no PAD added;
♦: 2% solution of rapeseed protein isolate, 2 U PAD per L added;
▲: 2% solution of rapeseed protein isolate, 20 U PAD per L added;
x: 2% solution of rapeseed protein isolate, 60 U PAD per L added.
X-axis: time (sec), Y-axis: relative sweetness (%) whereby sweetness of each sample was normalized at 100% at 5 seconds after swallowing. The arrow at -5 sec indicates the sweetness perceived directly in the mouth before swallowing, while 0 sec represents the sweetness immediately after swallowing the sample.

## Detailed description of the invention

Poor digestibility of vegetable proteins is partly due to the high levels of anti-nutritional factors (ANFs) such as trypsin inhibitors. The mouthfeel of a drink prepared from plant proteins is typically described as being not acceptable. Until the present invention, no acceptable solution is available to overcome these drawbacks of a plant protein drink.
Protein arginine deiminase (PAD) is an enzyme that deiminates arginine residues in proteins yielding citrulline as described in WO 2008/000714 or WO 2017/009100 by. For the trypsin inhibitors in which arginine occupies the reactive site, PAD action would render the inhibitor inactive towards trypsin. Chymotrypsin protease inhibitors and α-amylase inhibitors contribute as well to lowering food digestibility in a similar manner to trypsin inhibitors. Several of these inhibitors were shown to possess a crucial arginine residue important for the inhibitory function (Gideon M. Polya, Atta-ur-Rahman Ed., Studies in Natural Products Chemistry, 29, 567-641). About 10% of all proteases inhibitors contain arginine at the reactive, P1 site (309 sequences from 3300 found in the MEROPS database for protease inhibitors). Trypsin inhibitors with arginine at P1 site can be found among all classes of vegetable proteins such as legumes, cereals, nuts, and seeds (soy, rapeseed, nuts, wheat, maize, barely, potatoes, rice, oats, tomatoes etc.), however not all inhibitory activities are found equally distributed within different species. For example, about 40% of proteins in potato are protease inhibitors with many different classes of protease inhibitors present (more than 10 different proteases inhibitors identified) with distribution of these inhibitors dependent on the potato variety (Pouvreau L. et al., J. Agric. Food Chem. (2001) 49, 2864-2874).

**EP 3 801 068 B1**

Deactivation of Kunitz soybean trypsin inhibitor was shown by Takahara H. et al. (J. Biol. Chem. (1985) 260, 8378-8383) using mammalian PAD. However, deactivation of trypsin inhibitory activity in a complex protein matrix such as soy flour was never shown. For a benefit in a food product, a PAD activity in a complex food matrix is essential. In addition, mammalian PAD has a narrow selectivity for the arginine containing protein material; not all proteins containing arginine residues could be modified using the mammalian PAD2 enzyme. It was shown that chicken egg white ovomucoid, which contains an arginine residue at the trypsin inhibitory reactive site could not be modified by the mammalian PAD enzyme. WO 2017/009100 describes the use of PAD to improve a physical property such as gelling and foaming, or an emulsification property, or the solubility. However, the available prior art does not disclose or suggest the use of PAD to change sensory aspects, let alone describe how sensory aspects would be changed upon treatment by PAD, *i.e.* would a certain sensory aspect become stronger upon PAD treatment, or weaker?

Surprisingly, the present invention demonstrates that different aspects of sensory and/or mouth feel and/or digestibility of a food comprising rapeseed protein can be improved using PAD.

Advantageously, the product and process of the invention relates to modifying sweetness, liquorice, astringency, powdery/chalk, fullness, thickness and/or digestibility of a food comprising rapeseed protein by incubating rapeseed protein isolate or a rapeseed protein solution with PAD and optionally processing said PAD-treated protein solution into a protein comprising food. Preferably, the product and/or process of the invention enables modification of at least one of the mentioned properties. For example, the product and/or process of the invention provides a method for modifying (preferably decreasing) sweetness of a food comprising rapeseed protein. Alternatively, the invention provides a process for modifying (preferably decreasing) liquorice of a food comprising rapeseed protein. The invention also provides a process for modifying (preferably decreasing) astringency of a food comprising rapeseed protein. The invention further provides a process for modifying (preferably decreasing) powdery/chalk of a food comprising rapeseed protein. Alternatively, the invention provides a process for modifying (preferably decreasing) fullness of a food comprising rapeseed protein. The invention also provides a process for modifying (preferably decreasing) thickness of a food comprising rapeseed protein. The invention further provides a process for modifying (preferably increasing) digestibility of a food comprising rapeseed protein. In another preferred embodiment, the process of the invention modifies at least 2, 3 or 4 of the mentioned properties, such as a process for modifying powdery/chalk, fullness and thickness of a food comprising rapeseed protein.

The term "sweetness" as used herein refers to the basic taste most commonly perceived when eating foods rich in sugar. The term "liquorice" as used herein refers to a taste sensation/component present in the sweet root of *Glycyrrhiza glabra* or in stevia plant species. The term "astringency" as used herein refers to the dry, puckering mouth feel similar to that caused by tannins that are for example found in many fruits or by proteins, especially in an acidic environment. The term "powdery/chalk" as used herein refers to the degree in which the product feels powdery or grainy in the mouth. The term "fulness" as used herein refers to the feeling of full, round body in the mouth. The term "thickness" as used herein refers to firmness in the mouth and represents the force needed to push the product in between tongue and palate. The term "digestibility" as used herein refers to the capability of being digested and relates to the quantity of food that is retained by the body versus the quantity of food that is consumed. Digestibility of a protein directly relates to the extent of hydrolysis that digestive proteases such as pepsin and pancreatic peptidases, obtained upon incubation with the said protein under physiological relevant conditions. The term "modifying" refers to either increasing or decreasing depending on the aimed goal.

The product and process of the invention relate to rapeseed protein isolate with improved sensory attributes. PAD-treated rapeseed protein isolate of the invention has significant reduction in eight sensory aspects when compared to untreated rapeseed protein isolate. Mouthfeel, flavor intensity, sweet flavor, bitter flavor, liquorice flavor, bitter aftertaste, length of aftertaste and astringency of aftertaste all are reduced by 10% to 60% compared to untreated rapeseed protein isolate depending on the specific sensory aspect and the amount of PAD used. Mouthfeel reduces from by about 15% to 40% or from about 20% to 35%. Flavor intensity reduces from by about 10% to 35% or from about 15% to 30%. Sweet flavor reduces from by about 10% to 35% or from about 15% to 30%. Bitter flavor reduces from by about 20% to 45% or from about 25% to 40%. Liquorice flavor reduces from by about 15% to 40% or from about 20% to 35%. Bitter aftertaste reduces from by about 30% to 55% or from about 25% to 50%. Length of aftertaste reduces from by about 15% to 40% or from about 20% to 35%. Astringency of aftertaste reduces from by about 15% to 40% or from about 20% to 35%. Hence the invention provides a novel rapeseed protein isolate with improved taste in multiple embodiments compared to existing rapeseed protein isolate.

Whether or not any of the mentioned properties is increased or decreased is determined by comparing to an otherwise identical prepared food except that the rapeseed protein solution is not incubated with PAD.

The step of incubating a rapeseed protein isolate or rapeseed protein solution with PAD can be performed at any suitable pH for any suitable time and with any suitable enzyme concentration. The skilled person can establish a suitable enzyme amount or a suitable incubation temperature or a suitable incubation pH or a suitable incubation time, for instance incubating protein with a PAD at a pH of between 4 and 9, such as a pH of between 5 and 8.5, such as a pH of between 5.5 and 8, such as a pH between 6 and 7, or a pH of between 6.2 and 6.8, for instance at a pH of about 6.5. A suitable temperature at which protein is incubated with PAD may be between 20 and 60°C, such as a between 30 and 50°C, or between 35 and 45°C.

The PAD-treated rapeseed protein solution can for example be a final product, such as, but not limited to, a protein drink. Alternatively, the PAD-treated rapeseed protein solution is a food ingredient that can subsequently be further processed into a food comprising rapeseed protein.

A process of the invention comprises at least 1 step of incubating a rapeseed protein solution with a PAD. As described above and depending on whether the rapeseed protein solution is a food ingredient or a final protein comprising food, a process of the invention optionally comprises the step of processing said PAD-treated rapeseed protein solution into a rapeseed protein comprising food.

The term protein arginine deiminase and peptidyl arginine deiminase (PAD) are used interchangeably herein. Protein or peptidyl arginine deiminases belong to a family of enzymes (EC 3.5.3.15) that convert peptide or protein bound arginine into peptide or protein bound citrulline. This process is called deamination or citrullination. In the reaction from arginine to citrulline, one of the terminal nitrogen atoms of the arginine side chain is replaced by oxygen. The reaction uses one water molecule and yields ammonia as a side product. Whereas arginine is positively charged at a neutral pH, citrulline is uncharged. Surprisingly, it was found that a protein wherein at least part of the arginine has been converted into citrulline, and thereby resulting in protein with less charge, exhibited modified sweetness, liquorice, astringency, powdery/chalk, fulness, thickness and/or digestibility.

PAD may be derived from any suitable origin, for instance from mammalian or microbial origin. PAD's used in the present invention are advantageously derived from a microbial source, *i.e.* the PAD used in a process of the invention is a microbial PAD. For instance, PAD's may be derived from fungal origin such as from *Fusarium* sp. such as *Fusarium graminearum, Chaetomium globosum, Phaesphaeria nodorum* or from bacterial origin such as from the bacteria *Streptomyces, e.g. Streptomyces scabies, Streptomyces clavuligeres.* The wording "derived" or "derivable" from with respect to the origin of a polypeptide as disclosed herein, means that when carrying out a BLAST search with a polypeptide as disclosed herein, the polypeptide may be derivable from a natural source, such as a microbial cell, of which an endogenous polypeptide shows the highest percentage homology or identity with the polypeptide as disclosed herein.

PAD's are for instance known from WO 2008/000714, disclosing a process for enzymatically treating a protein with a PAD, wherein at least 30% of the arginine is transformed into citrulline.

A PAD may be a pure or purified PAD. A pure or purified PAD is an enzyme that may be at least 50% pure, e.g., at least 60% pure, at least 70% pure, at least 75% pure, at least 80% pure, at least 85% pure, at least 80% pure, at least 90% pure, or at least 95% pure, 96%, 97%, 98%, 99%, 99.5%, 99.9% pure for instance as determined by SDS-PAGE or any other analytical method suitable for this purpose and known to the person skilled in the art.

Suitable amounts of PAD added to rapeseed protein isolate are from 0.01 to 1 U PAD/g of rapeseed protein isolate, or from 0.05 to 0.5 U PAD/g of rapeseed protein isolate, or from 0.1 to 0.3 U PAD/g of rapeseed protein isolate whereby the rapeseed protein isolate preferably is in an aqueous solution or suspension, such as for example a 2% solution in water.

A PAD, or polypeptide having PAD activity may be produced in any suitable host organism by methods known in the art, for instance in fungi such as *Aspergilli, e.g. Aspergillus niger* or *Aspergillus oryzae, Trichoderma,* or the yeasts *Saccharomyces,* and *Kluyveromyces* or the bacteria of the genus *Streptomyces* or *Bacilli.* A suitable method to express a polypeptide having PAD activity in *Aspergillus niger* is for instance disclosed in Examples 3 and 4 in WO 2008/000714.

The term "food comprising rapeseed protein" as used herein refers to any type of food as long as the food at least comprises rapeseed protein. The term food refers to solid foods as well as drinks. A rapeseed protein comprising drink prepared by a process of the invention can have a neutral or an acidic pH.

In a first aspect, the invention provides a rapeseed protein isolate comprising 40 to 65% cruciferins and 35 to 60% napins and having a solubility of at least 88% when measured over a pH range from 3 to 10 at a temperature of $23\pm2$°C, wherein at least one of the amino acids in the cruciferins and/or napins is citrulline and wherein the rapeseed protein isolate comprises from 0.5-10% of citrulline of the rapeseed protein.

In an embodiment, in the rapeseed protein isolate at least 15%, or at least 30%, or preferably at least 45%, or at least 60% or at least 80% of the arginine residues that were originally present in the rapeseed protein are transformed into a citrulline residue. Arginine content in rapeseed protein is believed to be from 5-10% (Bell J.M. et al. Can. J. Animal Sci. (2000) 80, 169-174). Accordingly, the rapeseed protein of the invention may contain from 1-8% of citrulline, or from 1.5-7% of citrulline.

In an embodiment, the rapeseed protein isolate has a solubility of at least 92% when measured over a pH range from 3 to 10 at a temperature of $23\pm2$°C. Preferably, the rapeseed protein isolate has a solubility equal to or at least 93% when measured in water over a pH range from 6 to 9 at a temperature of $23\pm2$°C. This is also known as the soluble solids index (SSI).

In an embodiment, the rapeseed protein isolate comprises at least 5% (on dry matter) 12S rapeseed protein where the presence of 12S is verified by Blue Native PAGE.

For use in human food consumption the rapeseed protein isolate preferably comprises a low level of salt. This is measured by the conductivity. Preferably the conductivity of the rapeseed protein isolate in an aqueous 2% solution is less than 9,000 μS/cm over a pH range of 2 to 12. More preferably the conductivity of the rapeseed protein isolate in a 2% aqueous solution is less than 4,000 μS/cm over a pH range of 2.5 to 11.5. For comparison, the conductivity of a 5 g/L sodium chloride aqueous solution is around 9,400 μS/cm.

In another embodiment, the rapeseed protein isolate has a phytate level less than 0.4 wt.%, more preferably less than 0.3 wt.% and most preferably less than 0.15 wt.%.

In another embodiment, the rapeseed protein isolate has a protein content of at least 90 wt.% (calculated as Kjeldahl N x 6.25) on a dry weight basis, more preferably at least 94 wt.%, most preferably at least 96 wt.% and especially at least 98 wt.%.

In an embodiment the rapeseed protein isolate is un-hydrolyzed.

In a second aspect of the invention, there is provided a process for obtaining a rapeseed protein isolate comprising the steps of:

    i) mixing cold-pressed rapeseed oil meal with an aqueous liquid at a temperature of from 45 to 65°C;
    ii) separation of the aqueous liquid from the mixture obtained in step i);
    iii) decreaming of the aqueous liquid obtained in step ii);
    iv) adjusting the pH of the decreamed aqueous liquid obtained in step iii) to neutral by adding acid or base, and mixing with a precipitant to obtain a precipitate;
    v) removing the precipitate obtained in step iv) to obtain an aqueous liquid;
    vi) concentrating and washing the aqueous liquid obtained in step v);
    vii) isolating rapeseed protein isolate from the concentrated and washed aqueous liquid obtained in step vi) by means of drying,

wherein peptidyl arginine deiminase (PAD) is added during any or all of steps i), ii), iii), iv), v) and vi).

In an embodiment, PAD may be derived from any suitable origin, for instance from mammalian or microbial origin. PAD's used in the present invention are advantageously derived from a microbial source, *i.e.* the PAD used in a process of the invention is a microbial PAD. For instance, PAD's may be derived from fungal origin such as from *Fusarium* sp. such as *Fusarium graminearum, Chaetomium globosum, Phaesphaeria nodorum* or from bacterial origin such as from the bacteria *Streptomyces, e.g. Streptomyces scabies, Streptomyces clavuligeres.* In an embodiment the *Fusarium*-derived PAD disclosed in and prepared following Examples 3 and 4 of WO 2008/000714 is added during any or all of steps i), ii), iii), iv), v) and vi) above.

The rapeseed protein isolate is produced from rapeseed cold-pressed cake/meal, the byproduct of rapeseed oil production.

Steps i) to vii) are preferably carried out subsequently, *i.e.* in the order in which they are mentioned above.

In step i), preferably the aqueous liquid is an aqueous salt solution. More preferably the aqueous salt solution comprises sodium chloride. Most preferably the aqueous salt solution comprises 1 to 5% sodium chloride (w/w). Preferably the extraction time is in the range of from 5 to 60 minutes, more preferably in the range from 30 to 60 minutes. Preferably during extraction, the protein:fat ratio in the protein rich liquid phase is maintained above 12. Preferably the extracted rapeseed oil meal is washed with aqueous extraction liquid at a ratio of from 1:2 to 1:30, more preferably of from 1:4 to 1:25, still more preferably of from 1:5 to 1:20 (w/w).

In step ii), the separation may be carried out using any means known in the art including filtration and centrifugation. For example, standard filters, a filter press, a belt filter or other filters or centrifuges may be used, preferably at reduced pressure, *i.e.* of from -0.8 to -0.1 bar. Preferably the extraction temperature of from 45 to 65°C is maintained.

In one embodiment, the mixing in step i) and the separating in step ii) may be carried out according to gravity-induced solid-liquid extraction as described in WO 2014/147068.

In step iii), preferably the aqueous extraction liquid containing the proteins is decreamed using centrifugation. Alternatively, filtration may be used. Preferably the fat level is reduced by at least 50% (w/v). The removal is measured with the decrease in concentration, while keeping the volume (reasonably) constant as about between 0.5 to 5% of the volume is removed as "cream".

In step iv) the precipitant may comprise several divalent ions including salts of magnesium, zinc, iron, and calcium. Preferably an aqueous calcium chloride solution is used, as advocated in the prior art, for example in US 2014/256914 (albeit for precipitation in pulse pea protein, a different species). Preferably the final concentration of the calcium chloride solution in the extract is in the range of from 0.1 to 50 g/L, more preferably in the range from 0.1 to 40 g/L, especially in the range from 0.2 to 30 g/L and most especially in the range from 1 to 20 g/L. The mixing with the precipitant can take place before, during or after pH adjustment. pH adjustment is to neutral, preferably to a value between pH 6.0 and pH 8.0, more preferably to a value between pH 6.2 and pH 7.2.

In step v), the precipitate (*e.g.* the phytate salt of calcium, magnesium, iron, zinc, or the like) may be removed by any of several methods including filtration, centrifugation, or the addition of enzymes such as phytases.

In step vi), preferably concentration is carried out by ultrafiltration to reach a concentration of at least 6 x. Preferably washing is carried out by diafiltration water using approximately 10 times the volume of the concentrate. For example, if the initial volume is 300 L, the liquid is concentrated to about 50 L (6x concentration) and is then washed with 500 L (10x) of water. Preferably the washing is carried out at a temperature in the range of from 45 to 65°C using an 8 to 12 kDa polyether sulfone PES membrane. Alternatively, a regenerated cellulose may also work Cold ultrafiltration may also be used. Preferably the washing is carried out using a 0.5 to 2% sodium chloride solution followed by a 0.015% to 0.4% sodium chloride solution. Alternatively, the second wash may be with distilled water.

In step vii) the drying is preferably carried out using standard drying techniques such as evaporation, lyophilization, spray-drying and the like, with or without the application of reduced pressure. Preferably spray drying is used.

In an embodiment the rapeseed protein isolate is obtained in a process without a fractionating step for separating out cruciferins and napins.

In an embodiment the rapeseed protein isolate is obtained in a process where the levels of napin and cruciferin are kept substantially constant within the claimed range (*i.e.* neither the napin (2S) or cruciferin levels (12S) are deliberately increased). Preferably the rapeseed protein isolate comprises at least 5% (on dry matter) of 12S rapeseed protein wherein presence of 12S is verified by Blue Native PAGE. More preferably the rapeseed protein isolate comprises at least 10%, most preferably at least 15%, especially at least 25% and most especially at least 65% (on dry matter) of 12S rapeseed protein wherein presence of 12S is verified by Blue Native PAGE.

Disclosed herein is a rapeseed protein isolate obtainable by the process of the second aspect having a reduction in sensory aspect of from 10% to 60% compared to untreated rapeseed protein isolate wherein said sensory aspect is mouthfeel or flavor intensity or sweet flavor or bitter flavor or liquorice flavor or bitter aftertaste or length of aftertaste or astringency of aftertaste or combinations of any or all thereof. Alternatively, the reduction in sensory aspect compared to untreated rapeseed protein isolate is from 15% to 50% or from 20% to 40%.

Disclosed herein is the use of a rapeseed protein isolate according to the first aspect of the invention as a foaming agent or as an emulsifying agent for food products.

In a further aspect of the invention there is provided a food product comprising a rapeseed protein isolate according to the first aspect of the invention.

The invention will be explained in more detail in the following Examples, which are not limiting the invention.

## EXAMPLES

### Test methods

#### Protein content

Protein content was determined by Kjeldahl method AOAC Official Method 991.20 Nitrogen (Total) in milk, using a conversion factor of 6.25 used to determine the amount of protein (% (w/w)).

#### Solubility test

The below solubility test is adapted from Morr et al. (J. Food Sci. (1985) 50, 1715-1718), the difference being the use of water instead of 0.1M sodium chloride.

Sufficient protein powder to supply 0.8 g of protein was weighed into a beaker. Water was added to the powder and the mixture was stirred until a smooth paste was formed. Additional water was then added to make a total weight of 40 g (2% w/w protein dispersion). The dispersion was slowly stirred for at least 30 min using a magnetic stirrer. Afterwards the pH was adjusted to the desired level (2, 3, 4, etc.) with sodium hydroxide or hydrochloric acid. After stirring for 60 minutes, an aliquot of the dispersion was reserved for protein content determination (Kjeldahl analysis). Another portion of the sample was centrifuged at 20,000 g for 2 min. The supernatant and pellet were separated after centrifugation. The protein content was also determined by Kjeldahl analysis.

$$\text{Protein solubility (\%)} = (\text{protein in supernatant} / \text{protein in total dispersion}) \times 100.$$

Alternative methods for determining solubility are available and in some case use buffers, like borate-phosphate buffer in WO 2011/057408. However, such as values are incomparable with the ones obtained in the instant application that are determined in the absence of buffer.

MW determination by Blue Native PAGE

In the case of Native PAGE, the protein charge has an impact on the electrophoretic mobility. In the case of Blue Native PAGE (and to the contrary of Clear Native PAGE), the Coomassie Brilliant Blue dye provides the necessary charges to the protein complexes for the electrophoretic separation. The proteins were dissolved in 500 mM sodium chloride. As high salt concentrations are incompatible with electrophoretic separation, the sample was diluted 10-fold with water (final salt concentration: 50 mM). Coomassie® G-250 (SimplyBlue™, ThermoFischer Scientific) was used and gels were scanned with an ExQuest™ Spot Cutter (BioRad). Resultant bands after carrying out Blue Native PAGE were observed. It would be expected that bands around 14 kDa indicate 2S, around 150 kDa indicate 7S and around 300 kDa indicate 12S proteins.

Cruciferin/napin (C/N) ratio

The C/N ratio was determined by Size Exclusion Chromatography (SEC) analysis. Samples were dissolved in a 500 mM sodium chloride saline solution and analyzed by HP-SEC using the same solution as the mobile phase. Detection was done by measuring UV absorbance at 280 nm. The relative contribution of cruciferin and napin (%) was calculated as the ratio of the peak area of each protein with respect to the sum of both peak areas.

Phytate level

Phytates were measured at Eurofins using method QD495, based on Ellis et al. (Anal. Biochem. (1977) 77, 536-539).

Peptidyl arginine deiminase (PAD) activity

Measurement of PAD activity was performed as described in WO 2017/009100A1 by measuring the formation of citrulline residues in $\alpha$-N-benzoyl-L-arginine-ethyl ester (BAEE). The incubation mixture contained 100 mM tris-HCl buffer (pH 7.5), 5 mM $CaCl_2$, 10 mM DTT, 10 mM BAEE in a final volume of 700 $\mu$L. Incubation was performed at 55°C for 30 min, and the reaction was stopped by adding 100 $\mu$L 8 N $HClO_4$. Citrulline was determined by colorimetry according to the method of Guthöhrlein and Knappe (Anal. Biochem. (1968) 26, 188). One unit of PAD is expressed as 1 $\mu$mol of citrulline formed/min/mg of protein.

**Materials**

Rapeseed protein isolate

Rapeseed protein isolate was prepared from cold-pressed rapeseed oil seed meal as described in WO 2018/007492. The conductivity of the resultant rapeseed protein isolate in a 2% solution was less than 4,000 $\mu$S/cm over a pH range of 2.5 to 11.5. Blue Native PAGE: Main bands were observed roughly around 300 kDa, between the 242 and 480 kDa MW markers. The resultant rapeseed protein isolate comprised in the range of from 40 to 65% cruciferins and 35 to 60% napins, contained less than 0.26 wt.% phytate and had a solubility of at least 88% when measured over a pH range from 3 to 10 at a temperature of 23±2°C.

Cloning and expression of PAD

Cloning and expression of the polypeptide having PAD activity was performed as disclosed in Examples 3 and 4 of WO 2008/000714.

**Example 1**

**Reduction of trypsin inhibitory activity (TIA) in rapeseed proteins treated with PAD**

Rapeseed proteins containing TIA were incubated with PAD and the reduction in TIA was measured using a BAEE assay. The preparation of the proteins with and without PAD incubation and the assay used are described below.

Rapeseed cake sample preparation: To 100 mg of rapeseed cake 900 $\mu$L 2% NaCl was added and 0.17 units of PAD. The rapeseed was solubilized for 30 minutes at 55°C in a Thermomixer at 800 rpm. Hereafter the sample was centrifuged for 10 minutes at 20817 g. The control rapeseed cake sample was solubilized in the absence of PAD.

Rapeseed protein isolate sample preparation: Rapeseed protein isolate was prepared as described in WO 2018/007492. To a 2% (w/v) solution of this material, 0.17 U/ml PAD was added, and the solution was incubated for 2.5 hours at 40°C (Thermomixer 600 rpm). The control sample was incubated with the same volume of water instead of PAD.

TIA measurement with BAEE assay: The assay used is essentially as described in the Sigma protocol "assay method for trypsin inhibitor activity". 25 $\mu$L 1 mg/mL Trypsin in 1 mM HCl (Sigma; Trypsin from bovine pancreas; 15267 units/mg solid) was added to 1.875 mL 1 mM HCl. Subsequently 100 $\mu$L of the protein sample prepared as described above (with or without enzyme incubation) was added into the mixture. As a control, 100 $\mu$L 1 mM HCl was added instead of the inhibitor in the trypsin activity measurement. These solutions were incubated for 5 minutes. To 2.7 mL 67 mM sodium phosphate pH 7.6 (25°C) 300 $\mu$L BAEE (Sigma; Na-Benzoyl-L-Arginine ethyl ester hydrochloride 0.86 mg/ml in the same buffer) was added and 100 $\mu$L 1 mM HCl. Trypsin activity was determined after addition of 100 $\mu$L of the Trypsin solutions and the reaction was monitored at 253 nm. The spectrophotometer was calibrated with 100 $\mu$L 1 mM HCl instead of the trypsin solution. The reaction was followed for 20 minutes with 3 data points per minute. An increase in absorbance at 253 nm indicates cleavage of the BAEE by the trypsin. When trypsin was incubated with the protein sample prior the substrate BAEE addition, the absorbance at 253 nm decreased in time, indicating inhibition of enzyme activity. When protein sample was incubated with PAD prior addition to the trypsin, the absorbance at 253 nm is partially restored indicating that trypsin inhibition by the protein sample diminished. From the slopes with and without PAD treated samples a reduction of TIA levels by PAD can be calculated. In the below Table, the reduction of TIA measured by the BAEE for the rapeseed protein samples is presented.

Table: Reduction of TIA in proteins treated with PAD

| Protein source | TIA reduction with PAD treatment, % |
|---|---|
| Rapeseed cake | 88 |
| Rapeseed protein isolate (RPI) | 71 |

## Example 2

### Preparation of modified rapeseed protein isolate comprising citrulline

To a 10% solution of rapeseed protein isolate in water (500 mL, see Materials), 43 units of PAD were added. The resulting suspension was incubated for 3 hours at 40-45°C. Subsequently the sample was frozen and lyophilized.

In alternative approaches leading to similar modified protein isolate comprising citrulline, PAD was added at different steps of the process as described in WO 2018/007492A. Hence the process comprised the steps of:

i) mixing cold-pressed rapeseed oil meal with an aqueous liquid at a temperature of from 45 to 65°C;
ii) separation of the aqueous liquid from the mixture obtained in step i);
iii) decreaming of the aqueous liquid obtained in step ii);
iv) adjusting the pH of the decreamed aqueous liquid obtained in step iii) to neutral by adding acid or base, and mixing with a precipitant to obtain a precipitate;
v) removing the precipitate obtained in step iv) to obtain an aqueous liquid;
vi) concentrating and washing the aqueous liquid obtained in step v);
vii) isolating rapeseed protein isolate from the concentrated and washed aqueous liquid obtained in step vi) by means of drying,

wherein PAD was added during any or all of steps i), ii), iii), iv), v) and vi).

## Example 3

### Sensory assessment of rapeseed protein isolate treated with PAD

Aqueous rapeseed protein powder suspensions were made (1000 mL, 2% w/w) in tap water and the pH was adjusted to 6.5 with 4M $H_2SO_4$. Suspensions were incubated for 2h h at 45°C with and without PAD addition at different enzyme dosage. The enzyme was further inactivated, by heating the materials at 65°C, with a holding time of 5 minutes. The samples were evaluated by means of descriptive analysis (QDA) with the sensory panel (n=13) on attributes relevant for the product in the test. During the test the samples were offered according to an optimally balanced design and were scored on 0-100 unstructured line scales in EyeQuestion in duplicate. The data were analyzed with an ANOVA to find significant differences between the individual samples. Differences with $p < 0.05$ were considered as significant; the results are displayed in Figure 1.

### Example 4

**Digestibility of modified rapeseed protein isolate comprising citrulline**

The *in vitro* digestibility of the product obtained in Example 2 was measured at NIZO Food Research Center using the SYMPHYD platform as described in He et al. (Int. J. Food Sci. Nutr. (2014) 65, 386-390). The results of the in vitro model for protein digestion of rapeseed protein isolate with and without treatment with PAD are shown in Figure 2.

### Example 5

**Sweetness Time Intensity assessment of rapeseed protein isolate treated with PAD**

Aqueous rapeseed protein powder suspensions were made (1000 mL, 2% w/w) in tap water and the pH was adjusted to 6.5 with 4M $H_2SO_4$. Suspensions were incubated for 2h h at 45°C with and without PAD addition at different enzyme dosage. The enzyme was further inactivated, by heating the materials at 65°C, with a holding time of 5 minutes. A trained panel (n=12) rated the sweet intensity of the samples at several time points: directly after intake, after three seconds the sample was swallowed, and the intensity was scored again, and further scoring was at 5, 10, 20, 30, 60 and 120 seconds after swallowing. Intensity scores were given on unstructured 0-100 linescales in EyeQuestion. Samples were evaluated in duplicate and offered according to an optimally balanced design. The data were analyzed with ANOVA to find significant differences between individual samples; differences with $p<0.05$ were considered as significant. The temporal sweetness profile is shown in Figure 3. Sweetness of each sample was normalized at 100% at 5 seconds after swallowing.

## Claims

1. A rapeseed protein isolate comprising 40 to 65% cruciferins and 35 to 60% napins and having a solubility of at least 88% when measured over a pH range from 3 to 10 at a temperature of $23\pm2°C$, wherein at least one of the amino acids in the cruciferins and/or napins is citrulline and wherein the rapeseed protein isolate comprises from 0.5-10% of citrulline of the rapeseed protein.

2. Rapeseed protein isolate according to claim 1 comprising from 1-8% of citrulline of the rapeseed protein.

3. Rapeseed protein isolate according to anyone of the preceding claims with a cruciferin/napin ratio in the range of from 0.9 to 1.3.

4. Rapeseed protein isolate according to anyone of the preceding claims with a phytate level less than 0.4 wt.%.

5. Rapeseed protein isolate according to anyone of the preceding claims with a solubility of at least 94% when measured over a pH range from 3 to 10 at a temperature of $23\pm2°C$.

6. A process for obtaining a rapeseed protein isolate comprising the steps of:

   i) mixing cold-pressed rapeseed oil meal with an aqueous liquid at a temperature of from 45 to 65°C;
   ii) separation of the aqueous liquid from the mixture obtained in step i);
   iii) decreaming of the aqueous liquid obtained in step ii);
   iv) adjusting the pH of the decreamed aqueous liquid obtained in step iii) to neutral by adding acid or base, and mixing with a precipitant to obtain a precipitate;
   v) removing the precipitate obtained in step iv) to obtain an aqueous liquid;
   vi) concentrating and washing the aqueous liquid obtained in step v);
   vii) isolating rapeseed protein isolate from the concentrated and washed aqueous liquid obtained in step vi) by means of drying,

   wherein peptidyl arginine deiminase is added during any or all of steps i), ii), iii), iv), v) and vi).

7. Process according to claim 6, wherein said precipitant comprises a salt of calcium, iron, magnesium, or zinc.

8. Process according to any one of claims 6 or 7, wherein said rapeseed protein isolate comprises 40 to 65% of cruciferins and 35 to 60% of napins and wherein said rapeseed protein isolate has a solubility of at least 88% when measured over a pH range from 3 to 10 at a temperature of 23±2°C.

9. A food product or a pet food product comprising a rapeseed protein isolate according to anyone of claims 1 to 5.

**Patentansprüche**

1. Rapsproteinisolat umfassend 40 bis 65 % Cruciferine und 35 bis 60 % Napine und mit einer Löslichkeit von wenigstens 88 %, gemessen über einen pH-Wert-Bereich von 3 bis 10 bei einer Temperatur von 23±2 °C, wobei wenigstens eine der Aminosäuren in den Cruciferinen und/oder Napinen Citrullin ist und wobei das Rapsproteinisolat 0,5-10 % Citrullin aus dem Rapsprotein umfasst.

2. Rapsproteinisolat nach Anspruch 1, umfassend 1-8 % Citrullin aus dem Rapsprotein.

3. Rapsproteinisolat nach einem der vorstehenden Ansprüche mit einem Cruciferin/Napin-Verhältnis in dem Bereich von 0,9 bis 1,3.

4. Rapsproteinisolat nach einem der vorstehenden Ansprüche mit einem Phytatgehalt von weniger als 0,4 Gew.-%.

5. Rapsproteinisolat nach einem der vorstehenden Ansprüche mit einer Löslichkeit von wenigstens 94 % bei Messung über einen pH-Wert-Bereich von 3 bis 10 bei einer Temperatur von 23±2 °C.

6. Verfahren zum Erhalten eines Rapsproteinisolats, umfassend die Schritte:

   i) Mischen von kaltgepresstem Rapsölmehl mit einer wässrigen Flüssigkeit bei einer Temperatur von 45 bis 65 °C;
   ii) Abtrennen der wässrigen Flüssigkeit von dem bei Schritt i) erhaltenen Gemisch;
   iii) Entcremen der bei Schritt ii) erhaltenen wässrigen Flüssigkeit;
   iv) Einstellen des pH-Werts der bei Schritt iii) erhaltenen entcremten wässrigen Flüssigkeit auf Neutralwert durch Zugeben von Säure oder Base, und Mischen mit einem Präzipitationsmittel, um ein Präzipitat zu erhalten;
   v) Entfernen des bei Schritt iv) erhaltenen Präzipitats, um eine wässrige Flüssigkeit zu erhalten;
   vi) Konzentrieren und Waschen der bei Schritt v) erhaltenen wässrigen Flüssigkeit;
   vii) Isolieren von Rapsproteinisolat aus der bei Schritt
   vi) erhaltenen konzentrierten und gewaschenen wässrigen Flüssigkeit durch Trocknen,

   wobei während eines oder aller der Schritte i), ii), iii), iv), v) und vi) Peptidylarginindeiminase zugegeben wird.

7. Verfahren nach Anspruch 6, wobei das Präzipitationsmittel ein Salz von Calcium, Eisen, Magnesium oder Zink umfasst.

8. Verfahren nach einem der Ansprüche 6 oder 7, wobei das Rapsproteinisolat 40 bis 65 % Cruciferine und 35 bis 60 % Napine umfasst und wobei das Rapsproteinisolat eine Löslichkeit von wenigstens 88 % aufweist, wenn über einen pH-Wert-Bereich von 3 bis 10 bei einer Temperatur von 23±2 °C gemessen.

9. Nahrungsmittelprodukt oder Haustiernahrungsprodukt umfassend ein Rapsproteinisolat nach einem der Ansprüche 1 bis 5.

**Revendications**

1. Isolat de protéines de colza comprenant 40 à 65 % de cruciférines et 35 à 60 % de napines et ayant une solubilité d'au moins 88 % lorsqu'elle est mesurée sur une plage de pH de 3 à 10 à une température de 23 ± 2 °C, dans lequel au moins un des acides aminés dans les cruciférines et/ou les napines est la citrulline et dans lequel l'isolat de protéines de colza comprend de 0,5 à 10 % de citrulline de la protéine de colza.

2. Isolat de protéines de colza selon la revendication 1, comprenant de 1 à 8 % de citrulline de la protéine de colza.

3. Isolat de protéines de colza selon l'une quelconque des revendications précédentes, comportant un rapport cruciférine/napine dans la plage de 0,9 à 1,3.

4. Isolat de protéines de colza selon l'une quelconque des revendications précédentes, comportant un taux de phytate inférieur à 0,4 % en poids.

5. Isolat de protéines de colza selon l'une quelconque des revendications précédentes, ayant une solubilité d'au moins 94 % lorsqu'elle est mesurée sur une plage de pH de 3 à 10 à une température de 23 $\pm$ 2 °C.

6. Procédé d'obtention d'un isolat de protéines de colza comprenant les étapes de :

i) mélange de farine d'huile de colza pressée à froid avec un liquide aqueux à une température de 45 à 65 °C ;
ii) séparation du liquide aqueux du mélange obtenu à l'étape i) ;
iii) écrémage du liquide aqueux obtenu à l'étape ii) ;
iv) ajustement du pH du liquide aqueux écrémé obtenu à l'étape iii) jusqu'à neutralité par ajout d'acide ou de base, et mélange avec un agent de précipitation pour obtenir un précipité ;
v) élimination du précipité obtenu à l'étape iv) pour obtenir un liquide aqueux ;
vi) concentration et lavage du liquide aqueux obtenu à l'étape v) ;
vii) isolement de l'isolat de protéines de colza du liquide aqueux concentré et lavé obtenu à l'étape vi) au moyen d'un séchage,

dans lequel une peptidyl arginine déiminase est ajoutée au cours de l'une quelconque ou toutes les étapes i), ii), iii), iv), v) et vi).

7. Procédé selon la revendication 6, dans lequel ledit agent de précipitation comprend un sel de calcium, de fer, de magnésium ou de zinc.

8. Procédé selon l'une quelconque des revendications 6 ou 7, dans lequel ledit isolat de protéines de colza comprend 40 à 65 % de cruciférines et 35 à 60 % de napines et dans lequel ledit isolat de protéines de colza a une solubilité d'au moins 88 % lorsqu'il est mesuré sur une plage de pH de 3 à 10 à une température de 23 $\pm$ 2 °C.

9. Produit alimentaire ou produit alimentaire pour animaux de compagnie comprenant un isolat de protéines de colza selon l'une quelconque des revendications 1 à 5.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008094434 A
- WO 2014018922 A
- EP 1715752 B1
- WO 2008000714 A
- WO 2017009100 A
- WO 2014147068 A
- US 2014256914 A
- WO 2011057408 A
- WO 2017009100 A1
- WO 2018007492 A

### Non-patent literature cited in the description

- **G. SARWAR GILANI et al.** *British Journal of Nutrition*, 2012, vol. 108, 315-332
- Hydrolysis of rapeseed meal protein under simulated duodenum digestion: Kinetic modeling and antioxidant activity. **ZHOU CUNSHAN et al.** LWT Food Science and Technology. Academic Press, December 2015, vol. 68, 523-531
- **GIDEON M. POLYA ; ATTA-UR-RAHMAN ED.** *Studies in Natural Products Chemistry*, vol. 29, 567-641
- **POUVREAU L. et al.** *J. Agric. Food Chem.*, 2001, vol. 49, 2864-2874
- **TAKAHARA H. et al.** *J. Biol. Chem.*, 1985, vol. 260, 8378-8383
- **BELL J.M. et al.** *Can. J. Animal Sci.*, 2000, vol. 80, 169-174
- **MORR et al.** *J. Food Sci.*, 1985, vol. 50, 1715-1718
- **ELLIS et al.** *Anal. Biochem.*, 1977, vol. 77, 536-539
- **GUTHÖHRLEIN ; KNAPPE**. *Anal. Biochem.*, 1968, vol. 26, 188
- **HE et al.** *Int. J. Food Sci. Nutr.*, 2014, vol. 65, 386-390